# EUROPEAN PATENT SPECIFICATION

(11) **EP 4 273 639 B1**
(45) Date of publication and mention of the grant of the patent: **18.03.2026**
(21) Application number: 22171149.2
(22) Date of filing: 02.05.2022
(51) Int. Cl.: G05B 15/02, G05B 19/042, A47L 15/00, G05B 13/02

(54) **METHOD AND CONTROL UNIT FOR CONTROLLING A HOUSEHOLD APPLIANCE**
VERFAHREN UND STEUEREINHEIT ZUR STEUERUNG EINES HAUSHALTSGERÄTES
PROCÉDÉ ET UNITÉ DE COMMANDE POUR COMMANDER UN APPAREIL MÉNAGER

(43) Date of publication of application: 08.11.2023
(73) Proprietor: BSH Hausgeräte GmbH, 81739 München (DE)
(72) Inventor: Sampathkumar, Logeshwar, 89415 Lauingen (DE); Paintner, Kai, 86465 Welden (DE)

(56) References cited:
- DE-A1- 102017 219 260
- US-A1- 2020 085 275

## Description

The present document relates to a method and a corresponding control unit for controlling a household appliance, in particular a kitchen appliance.

A household, notably a kitchen, typically comprises different household appliances which need to be controlled by a user. Controlling a household appliance may involve different tasks, such as turning on the appliance, selecting an operation program of the appliance, waiting for the appliance to reach a certain state (e.g., waiting for the appliance to preheat), starting an operation program of the appliance, turning off the appliance, etc. Hence, controlling one or more appliances within a household may be cumbersome for a user.

From US 2020 / 0 085 275 A1 an intelligent dishwasher is known that receives cooking information and anticipates the state of dishes to be cleaned based on the cooking information. DE 10 2017 219 260 A1 describes another intelligent dishwasher.

The present document addresses the technical problem of increasing the efficiency and the comfort-of-use of one or more household appliances. The technical problem is solved by each of the independent claims. Preferred examples are described in the dependent claims.

According to an aspect, a control unit configured to control a household appliance (in particular a kitchen appliance, such as an oven or a refrigerator or a dishwasher) is described. The control unit may be part of the household appliance or the control unit may be external to the household appliance.

The control unit is configured to determine usage data regarding a user of the household appliance and regarding actual usage of the household appliance by the user. The usage data may comprise: data from a (digital and/or conventional (paper-based)) calendar of the user; data from a user device (e.g., a smartphone) of the user; data derived from one or more conversations of the user using natural language processing; data derived from a social media account of the user; data regarding an internet search history and/or internet surf history of the user and/or data from one or more other household appliances (within the household). Alternatively, or in addition, the usage data may comprise: data on an operation program of the household appliance that the user has used; data on one or more time instants at which the user has used the household appliance; data regarding a context within which the user has used the household appliance; and/or data on one or more settings of the household appliance that have been set by the user.

The usage data may comprise and/or may be structured in a plurality of datasets. A dataset may comprise data, which describes a usage situation, within which the user has used the household appliance. Furthermore, the dataset may comprise usage information, which describes how the user has actually used the household appliance in the usage situation. Hence, the usage data may comprise a plurality of labeled datasets. The plurality of labeled datasets may reflect one or more usage routines of the user.

The control unit is further configured to train a prediction entity based on the usage data using a machine-learning algorithm. The prediction entity may be trained such that the prediction entity is configured to predict an upcoming usage of the appliance based on input data. The prediction entity may comprise one or more artificial neural networks comprising parameters that are trained based on the usage data. The control unit may be configured to train the prediction entity such that the prediction entity reflects the one or more usage routines of the user, which are indicated by the usage data.

As indicated above, the usage data may comprise a plurality of labeled datasets, each dataset comprising input data describing a usage situation and usage information describing the actual usage of the appliance within the respective usage situation. These datasets may be used as training data for performing supervised learning of the prediction entity (e.g., using a backpropagation algorithm). By doing this, a reliable prediction entity may be trained, which is configured to reflect typical usage patterns and/or routines of the user.

The control unit is further configured to use the prediction entity for controlling the household appliance. In particular, the control unit may be configured to predict an upcoming usage of the appliance in an actual situation (which is described by actual input data) based on the actual input data using the prediction entity. The predicted upcoming usage may be indicative of: an upcoming activation or deactivation of the appliance; an upcoming start of an operation program of the appliance; a parameter setting of the appliance, and/or a time instant for the upcoming usage.

Hence, a control unit is described which makes use of an Al (artificial intelligence) based prediction entity for predicting a (likely) usage of the household appliance by the user in a particular usage situation. By way of example, it may be predicted that the user will most likely activate or deactivate the appliance. Alternative, or in addition, it may be predicted that the user will most likely start a particular operation program or set a particular parameter setting of the appliance. Alternative, or in addition, the most likely time instant of a user action may be predicted. This information, i.e., the predicted upcoming usage, may be used for controlling the appliance, thereby increasing the comfort-of-use of the appliance in an efficient manner.

In particular, the control unit may be configured to automatically control the appliance in dependence of the predicted upcoming usage. Alternatively, the control unit may be configured to output a control suggestion to the user (e.g., via a user device of the user), wherein the control suggestion is dependent on the predicted upcoming usage. The user may then decide whether or not to accept the control suggestion. If the control suggestion is accepted, the control unit may automatically control the appliance in accordance to the control suggestion.

According to the invention, the control unit is configured to determine actual input data for an actual (usage) situation (wherein the actual input data describes the actual situation, within which the appliance is used). The actual input data (for describing the actual situation) may be determined based on data from: a user device (e.g., a smartphone) of the user; a (digital and/or conventional (paper-based)) calendar of the user; one or more sensors (e.g., a camera or a microphone) configured to capture data regarding the household within which the household appliance is located; and/or the household appliance.

The actual input data may be indicative of user data regarding the user within the actual situation, such as the state, in particular the position, the moving speed and/or the moving direction, of the user in the actual situation. Alternatively, or in addition, the actual input data may be indicative of appliance data regarding the household appliance, in particular regarding the state (e.g., off or on) of the household appliance, in the actual situation. Alternatively, or in addition, the actual input data may be indicative of event data regarding one or more scheduled events of the user, in particular one or more events scheduled within a (digital and/or conventional (paper-based)) calendar of the user. Alternatively, or in addition, the actual input data may be indicative of environment data regarding an environment of the household appliance, in particular regarding the actual state of one or more other household appliances within the household of the user.

By gathering the above-mentioned input data, an actual usage situation of the appliance may be described in a particularly precise manner, thereby increasing the precision of the upcoming usage which is predicted by the prediction entity, and thereby further increasing the comfort-of-use of the appliance.

According to the invention, the control unit is further configured to determine an actual control of the appliance, which has been performed by the user in the actual situation (and which may deviate from the predicted upcoming usage). Furthermore, the control unit is configured to adapt the prediction entity based on the actual control and based on the actual input data. In this way, the control unit is enabled to repeatedly adapt the prediction entity to the actual usage of the user, thereby further increasing the comfort-of-use of the appliance.

The control unit may be configured to determine a plurality of user-specific prediction entities for a corresponding plurality of different users of the appliance. As a result of this, the comfort-of-use for different users may be improved. The actual user of the appliance may be determined based on data provided by one or more sensors (e.g., a camera or a microphone).

The control unit may be configured to determine a plurality of appliance-specific prediction entities for a corresponding plurality of different household appliances, thereby increasing the comfort-of-use of different appliances.

According to a further aspect, a method for controlling a household appliance is described. The method comprises determining usage data regarding a user and regarding actual usage of the household appliance by the user. Furthermore, the method comprises training a prediction entity based on the usage data using a machine-learning algorithm, notably such that the prediction entity is configured to predict an upcoming usage of the appliance based on input data (which describes a usage situation of the appliance). The prediction entity may be used for controlling the household appliance. According to the invention, the method further comprises the steps of determining actual input data for an actual situation; determining an actual control of the appliance, which has been performed by the user in the actual situation; and adapting the prediction entity based on the actual control and based on the actual input data.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows an example system comprising one or more household appliances;
- Figure 2: shows an example prediction entity for predicting a possible usage of a household appliance; and
- Figure 3: shows a flow chart of an example method for controlling a household appliance.

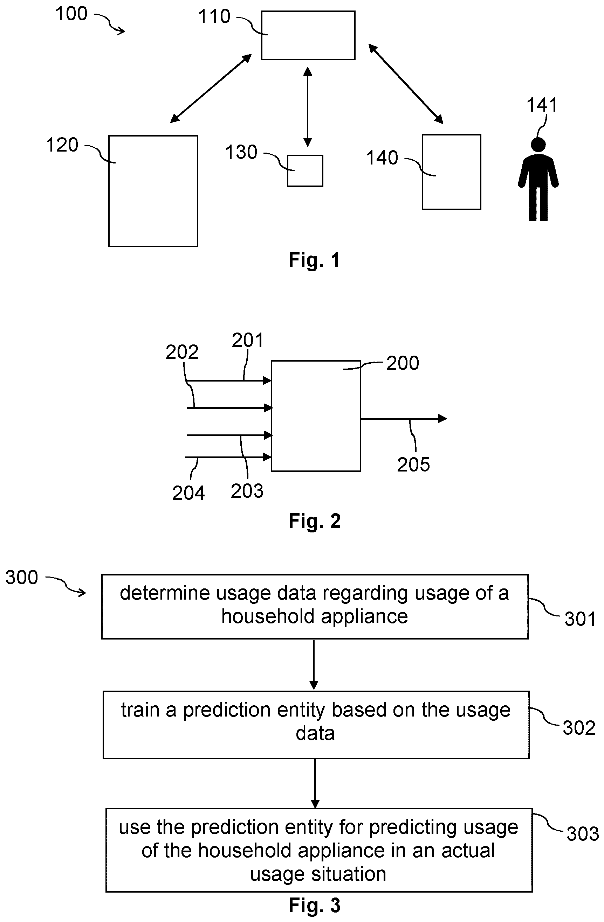

As outlined above, the present document is directed at increasing the comfort-of-use and/or the efficiency of one or more household appliances within a household, in particular within a kitchen. In this context, Fig. 1 shows an example system 100 which comprises one or more household appliances 120, such as an oven, a dishwasher, a washing machine, a dryer, a coffee machine, etc. Furthermore, the system 100 may comprise one or more sensors 130 which are configured to capture data regarding the environment of the one or more household appliances 120 within a household, in particular within a kitchen. The one or more sensors 130 may comprise a camera and/or a microphone. In addition, the system 100 may comprise a user device 140, such as a smartphone or tablet PC, of a user 141 of the one or more household appliances 120

The system 100 further comprises a control unit 110 which is configured to communicate with the one or more household appliances 110, the one or more sensors 130, and the one or more user devices 140 via a (wireless) communication network. Furthermore, the control unit 110 may be configured to train a prediction entity based on data provided by the one or more appliances 110, the one or more sensors 130 and/or the one or more user devices 140, wherein the prediction entity may be configured to predict an upcoming usage of a household appliance 120 by a particular user 141. The prediction entity may be trained using a machine-learning scheme. The prediction entity may comprise one or more artificial neural networks which are trained using the data which is provided to the control unit 110.

Fig. 2 shows an example prediction entity 200 which is configured to predict an upcoming usage 205 of a particular household appliance 120 based on input data 201, 202, 203, 204. The input data may comprise user data 201 regarding the user 141, appliance data 202 regarding the state of the appliance 120, event data 203 regarding one or more events of the user 141, and/or environment data 204 regarding the environment of the appliance 120. The input data 201, 202, 203, 204 may be determined based on the data provided by the one or more household appliances 120, the one or more sensors 130 and/or the one or more user devices 140.

The predicted usage 205 of the particular appliance 120 may be indicated to the user 141 (e.g., via a user interface of a user device 140). The user 141 may then decide to cause the particular appliance 120 to be controlled in accordance to the predicted usage 205, or to reject the predicted usage 205. By way of example, it may be predicted that the coffee machine is going to be used by the user 141. It may then be suggested to the user 141 to turn on the coffee machine, and the user 141 may decide to accept or to reject the control suggestion. If accepted, the coffee machine may be activated automatically by the control unit 110.

Hence, household appliances 120 may be transformed into Smart Home appliances, wherein Smart Home means, not just having remote control of the household appliances 120 via a mobile application, but providing an intelligent system 110 which learns user behavior over time and adapts its system behavior to better suit the users' needs.

The control unit 110 may be configured to identify an optimized configuration of one or more appliances 120 in a dynamic environment based on the (captured) daily usage of the one or more appliances 120 (by the user 141). During usage by a user 141, usage data may be collected (by the one or more appliances 120, the one or more sensors 130 and/or the one or more user devices 140) using mechanisms such as data crawling from a public domain or social network or through cookies or through NLP (natural language processing). The usage data may be used to train a prediction entity 200 (which is e.g., indicative a usage pattern), which may be used to personalize an appliance 120.

Usage data for training the prediction entity 200 may be collected using data crawling. Usage data may be provided directly from the user 141 using feedback or in situations, when the user 141 gives his consent. AI (artificial intelligence) methods such as NLP and/or deep internet scanning may be used to collect data regarding the user 141. Subsequent to identification of a user 141, the prediction entity 200 may be used to suggest an operation program of an appliance 120 based upon the needs of the user 141, or may be used to customize the appliance 120 such that the appliance 120 works efficiently within the household of the user 141.

The user 141 may have access to a user device 140 having a microphone and a speaker (such as a Smart TV, a smartphone, a personal assistant, a Bluetooth speaker, etc.). Such a device 140 may be used to capture and analyze a conversation of the user 141 using NLP (subsequent to the users' consent). This data may be used to learn about the user 141 (i.e., to train the prediction entity 200). By doing this, an appliance 120 in the household, notably in the kitchen, may be optimized, so that the user 141 feels comfortable.

Data crawling may be performed on the internet. For instance, when a user 141 needs to view a newspaper, the user 141 signs up on the internet site of the newspaper, or when the user 141 wants to buy something, the user 141 signs up, etc. This information may be used to learn about the specific user 141 (i.e., to train the prediction entity 200). By way of example, the internet cache history of a user 141 may be used as training data for the prediction entity 200.

Furthermore, training data may be gathered in a dialog with the user 141 (using techniques such as NLP). Alternatively, or in addition, the internet calendar of the user 141 may be analyzed to provide data for training the prediction entity 200.

Using data crawling and/or NLP mechanisms, a prediction entity 200 may be trained, which is configured to predict the user behavior based on input data 201, 202, 203, 204. The prediction entity 200 may be used to automatically adapt one or more appliances 120 (which may be interdependent on one another).

For example, if the user 141 searches or says something (e.g., about cooking a dish), and if the user 141 has set up a calendar appointment for an evening dinner, one or more appliances 120 (such as a timer function of an appliance 120) may be automatically adapted to better suit the predicted preparation of the dish.

In a further example, if a motion is detected in the kitchen and if the user 141 is known to be a regular morning coffee drinker, the coffee machine may be started automatically, so that by the time the user 141 reaches the machine, the coffee is already available for the user 141.

If the user is planning to bake something and has searched for a baking recipe, then the oven may automatically be preheated to a temperature which is indicated within the recipe. Alternatively, or in addition, the refrigerator may be opened automatically, when the user 141 is nearby, to allow the user 141 to load a dish in a comfortable manner.

In another example, if the user 141 is in the kitchen cutting vegetables, then the upcoming usage 205 of the dishwasher 120 may be predicted, and the door of the dishwasher 120 may be opened automatically, such that the user 141 may load dirty dishes more easily.

In a further example, if the user 141 is leaving the office towards home, and if it is detected that the dishwasher is full, then the dishwasher may be started automatically, to ensure that the dishes have been cleaned, when the user 141 arrives home.

Using a prediction entity 200, an appliance 120 may be enabled to be ready for an event, so that the user 141 can fulfill his plans more fluidly and smoothly. For example, if the user 141 has searched for a recipe around 11:00, and has scheduled to shop at 14:00 and has planned for an event at 17:00, then it may be concluded that the user 141 will most likely prepare the searched dish for the event. As a result of this, the oven may be preheated to 200°C around 16:00 and/or a notification may be given to the user 141 about the available inventory in the kitchen, such that the missing items for the dish may be identified by the user 141.

The prediction entity 200 may be used to predict a usage time for using an appliance 120 (e.g., the coffee machine). The prediction entity 200 may be configured to take into account scheduled events which are scheduled on the internet calendar of the user 141, thereby increasing the reliability of the predicted usage time of an appliance 120.

The prediction entity 200 may take into account user preferences, which may be taken into account when operating an appliance 120.

Based upon the available inventory in the refrigerator, a food recipe tailored for the user 141 may be determined using the prediction entity 200 (e.g., a healthy lunch since it has been learned that the user 141 wants to reduce weight). Different prediction entities 200 may be trained and used for different users 141 within a household. The different prediction entities 200 may be configured to provide different suggestions 205 for the different users 141.

If the user 141 is going on a vacation (which may be derived from the calendar), a push notification may be provided to the user 141, e.g., indicating foods which expires before his return. A wash cycle in the dishwasher may be completed, so that clean dishes are available on the return. The dishwasher may be used as a storage compartment. A cleaning operation may be performed for the dishwasher and/or for the coffee machine before the user 141 returns. A pyrolysis of the oven may be performed, so that the oven is usable upon return. An energy saving mode may be activated automatically for one or more appliances 120 during the vacation time. One or more appliances 120 may be automatically locked during the vacation time.

The prediction entity 200 may be configured to automatically adapt to changes in the behavior of the user 141.

The control unit 110 may be configured to provide an intercommunication between different appliances 120, in order to synchronize different processes. By way of example, there may be a baking process planned to start in 30 minutes for 60 minutes and the dishwasher may be washing for the upcoming 90 minutes. Using the control unit 110 the time of the baking process may be extended to 90 minutes or the washing time may be reduced to 60 minutes. As a result of this, both processes may be synchronized to end at the same time.

A standardized communication interface may be provided to allow appliances 120 of different manufactures to interact between one another.

Using the prediction entity 200, one or more appliances 120, in particular the operation of one or more appliances 120, may be adapted specifically to a particular user 141. Furthermore, recipes which are tailored to the preferences of a user 141 may be suggested.

The prediction entity 200 may be trained to learn routines of a user 141. User data regarding the user 141 may be collected and may be used to learn routines. Data from a calendar application of a smartphone 140 of the user 141 and/or of an online portal may be used as usage data. Furthermore, data regarding scheduled functions in one or more different appliances 120 may be collected as usage data (and may be compared with the usage data from the calendar application). Once the usage data from the calendar application and regarding planned events is collected, an Al algorithm may perform a correlation analysis and possible scenarios may be ranked and evaluated. After ranking and evaluation, the best fit of appliance operations may be suggested and the user 141 may be notified with the updates. Once the user 141 approves the updates, the one or more appliances 120 may be programmed according to the updates.

Fig. 3 shows a flow chart of an example (computer-implemented) method 300 for controlling a household appliance 120. The method 300 comprises determining 301 usage data regarding a user 141 of the household appliance 120 and regarding actual usage of the household appliance 120 by the user 141. The usage data may be tracked for a certain time interval (e.g., one or more days or one or more months). The usage data may indicate how the user 141 has actually used the household appliance 120. In particular, the usage data may indicate one or more routines of the user 141, when using the appliance 120.

Furthermore, the method 300 comprises training 302 a prediction entity 200 based on the usage data using a machine-learning algorithm. The prediction entity 200 may comprise a neural network which is trained based on the usage data. The prediction entity 200 may be trained such that the prediction entity 200 is configured to predict an upcoming usage 205 of the appliance 102 based on input data 201, 202, 203, 204. In other words, the prediction entity 200 may be trained to reflect one or more usage routines of the user 141 (which are reflected within the usage data).

The usage data may comprise a plurality of training datasets. Each training dataset may be indicative of input data 201, 202, 203, 204 which describes a usage situation. Furthermore, each training dataset may be indicative of the actual usage 205 of the appliance 120 in the respective usage situation. Using these labeled training datasets, a (neural network based) prediction entity 200 may be trained (using a supervised machine-learning algorithm).

The method 300 may further comprise using 303 the prediction entity 200 for controlling the household appliance 120 (in one or more future usage situations). By doing this, the comfort-of-use of the appliance 120 may be increased.

It should be noted that the description and drawings merely illustrate the principles of the claimed methods and systems. Those skilled in the art will be able to implement various arrangements that, although not explicitly described or shown herein, will fall within the scope of the appended claims. Furthermore, all examples and embodiment outlined in the present document are principally intended expressly to be only for explanatory purposes to help the reader in understanding the principles of the claimed methods and systems.

## Claims

1. A control unit (110) configured to control a household appliance (120); wherein the control unit (110) is configured to
- determine usage data regarding a user (141) and regarding actual usage of the household appliance (120) by the user (141);
- train a prediction entity (200) based on the usage data using a machine-learning algorithm, such that the prediction entity (200) is configured to predict an upcoming usage (205) of the appliance (102) based on input data (201, 202, 203, 204); and
- use the prediction entity (200) for controlling the household appliance (120);
**characterized in that** the control unit (110) is further configured to
- determine actual input data (201, 202, 203, 204) for an actual situation;
- determine an actual control of the appliance (120), which has been performed by the user (141) in the actual situation; and
- adapt the prediction entity (200) based on the actual control and based on the actual input data (201, 202, 203, 204).

2. The control unit (110) of claim 1, wherein the usage data comprises at least one of
- data from a digital calendar of the user (141);
- data from a user device (140) of the user (141);
- data derived from one or more conversations of the user (141) using natural language processing;
- data derived from a social media account of the user (141);
- data regarding an internet search history and/or internet surf history of the user (141); and/or
- data from another household appliance.

3. The control unit (110) of any of the previous claims, wherein the usage data comprises at least one of
- data on an operation program of the household appliance (120) that the user (141) has used;
- data on one or more time instants at which the user (141) has used the household appliance (120);
- data regarding a context within which the user (141) has used the household appliance (120); and/or
- data on one or more settings of the household appliance (120) that have been set by the user (141).

4. The control unit (110) of any of the previous claim, wherein the prediction entity (200) comprises one or more artificial neural networks comprising parameters that are trained based on the usage data.

5. The control unit (110) of any of the previous claim, wherein the control unit (110) is configured to
- control the household appliance (120) based on the actual input data (201, 202, 203, 204) using the prediction entity (200).

6. The control unit (110) of claim 5, wherein the control unit (110) is configured to determine actual input data (201, 202, 203, 204) based on data from
- a user device (140) of the user (141);
- a digital calendar of the user (141);
- one or more sensors (130) configured to capture data regarding a household within which the household appliance (120) is located; and/or
- the household appliance (120).

7. The control unit (110) of any of claims 5 to 6, wherein the actual input data (201, 202, 203, 204) is indicative of
- user data (201) regarding the user (141) within the actual situation, such as a state, in particular a position, a moving speed and/or a moving direction, of the user (141) in the actual situation;
- appliance data (202) regarding the household appliance (120), in particular regarding a state of the household appliance (120), in the actual situation;
- event data (203) regarding one or more scheduled events of the user (141), in particular one or more events scheduled within a calendar, in particular within a digital calendar, of the user (141); and/or
- environment data (204) regarding an environment of the household appliance, in particular regarding an actual state of one or more other household appliances (120) within the household of the user (141).

8. The control unit (110) of any of claims 5 to 7, wherein the control unit (110) is configured to
- predict an upcoming usage (205) of the appliance (120) in the actual situation based on the actual input data (201, 202, 203, 204) using the prediction entity (200); wherein the predicted upcoming usage (205) is notably indicative of
- an upcoming activation or deactivation of the appliance (120);
- an upcoming start of an operation program of the appliance (120); and/or
- a time instant for the upcoming usage (205); and
- automatically control the appliance (120) in dependence of the predicted upcoming usage (205); or
- output a control suggestion to the user (141); wherein the control suggestion is dependent on the predicted upcoming usage (205).

9. The control unit (110) of any previous claims, wherein the control unit (110) is configured to train the prediction entity (200) such that the prediction entity (200) reflects one or more usage routines of the user (141) indicated by the usage data.

10. The control unit (110) of any previous claims, wherein the control unit (110) is configured to
- determine a plurality of user-specific prediction entities (200) for a corresponding plurality of different users (141) of the appliance (120); and/or
- determine a plurality of appliance-specific prediction entities (200) for a corresponding plurality of different household appliances (120).

11. A method (300) for controlling a household appliance (120); wherein the method (300) comprises
- determining (301) usage data regarding a user (141) and regarding actual usage of the household appliance (120) by the user (141);
- training (302) a prediction entity (200) based on the usage data using a machine-learning algorithm, such that the prediction entity (200) is configured to predict an upcoming usage (205) of the appliance (102) based on input data (201, 202, 203, 204); and
- using (303) the prediction entity (200) for controlling the household appliance (120);
wherein the method is **characterized by** the steps of
- determining actual input data (201, 202, 203, 204) for an actual situation;
- determining an actual control of the appliance (120), which has been performed by the user (141) in the actual situation; and
- adapting the prediction entity (200) based on the actual control and based on the actual input data (201, 202, 203, 204).

12. A computer program comprising instructions which, when being executed by a control unit (110), in particular by a control unit (110) of a household appliance (120), cause the control unit (110) to carry out the method (300) of claim 11.

## Patentansprüche

1. Steuereinheit (110), die so konfiguriert ist, dass sie ein Haushaltsgerät (120) steuert, wobei die Steuereinheit (110) so konfiguriert ist, dass sie
- Nutzungsdaten zu einem Benutzer (141) und zu einer tatsächlichen Nutzung des Haushaltsgeräts (120) durch den Benutzer (141) ermittelt,
- eine Prognoseinstanz (200) auf der Grundlage der Nutzungsdaten mithilfe eines Maschinenlernalgorithmus trainiert, so dass die Prognoseinstanz (200) auf der Grundlage von Eingabedaten (201, 202, 203, 204) eine bevorstehende Nutzung (205) des Geräts (102) prognostiziert, und
- die Prognoseinstanz (200) zum Steuern des Haushaltsgeräts (120) benutzt,
**dadurch gekennzeichnet, dass** die Steuereinheit (110) ferner so konfiguriert ist, dass sie
- tatsächliche Eingabedaten (201, 202, 203, 204) für eine tatsächliche Situation ermittelt,
- eine tatsächliche Steuerung des Geräts (120) ermittelt, die in der tatsächlichen Situation durch den Benutzer (141) erfolgt ist, und
- die Prognoseinstanz (200) auf der Grundlage der tatsächlichen Steuerung und den tatsächlichen Eingabedaten (201, 202, 203, 204) anpasst.

2. Steuereinheit (110) nach Anspruch 1, wobei die Nutzungsdaten
- Daten aus einem digitalen Kalender des Benutzers (141),
- Daten aus einer Benutzervorrichtung (140) des Benutzers (141),
- mithilfe von Verarbeitung natürlicher Sprache aus einer oder mehreren Unterhaltungen des Benutzers (141) abgeleitete Daten,
- aus einem Social-Media-Konto des Benutzers (141) abgeleitete Daten,
- Daten zu einem Internet-Suchverlauf und/oder einem Internet-Surfverlauf des Benutzers (141) und/oder
- Daten aus einem anderen Haushaltsgerät umfassen.

3. Steuereinheit (110) nach einem der vorhergehenden Ansprüche, wobei die Nutzungsdaten
- Daten zu einem Betriebsprogramm des Haushaltsgeräts (120), das der Benutzer (141) benutzt hat,
- Daten zu einem oder mehreren Zeitpunkten, zu denen der Benutzer (141) das Haushaltsgerät (120) benutzt hat,
- Daten zu einem Kontext, in dem der Benutzer (141) das Haushaltsgerät (120) benutzt hat, und/oder
- Daten zu einer oder mehreren Einstellungen des Haushaltsgeräts (120), die von dem Benutzer (141) eingestellt worden sind.

4. Steuereinheit (110) nach einem der vorhergehenden Ansprüche, wobei die Prognoseinstanz (200) ein oder mehrere künstliche neuronale Netze mit Parametern umfasst, die auf der Grundlage der Nutzungsdaten trainiert werden.

5. Steuereinheit (110) nach einem der vorhergehenden Ansprüche, wobei die Steuereinheit (110) so konfiguriert ist, dass sie
- das Haushaltsgerät (120) auf der Grundlage der tatsächlichen Eingabedaten (201, 202, 203, 204) mithilfe der Prognoseinstanz (200) steuert.

6. Steuereinheit (110) nach Anspruch 5, wobei die Steuereinheit (110) so konfiguriert ist, dass sie tatsächliche Eingabedaten (201, 202, 203, 204) auf der Grundlage von Daten aus
- einer Benutzervorrichtung (140) des Benutzers (141),
- einem digitalen Kalender des Benutzers (141),
- einem oder mehreren Sensoren (130), die so konfiguriert sind, dass sie Daten zu einem Haushalt erfassen, in dem sich das Haushaltsgerät (120) befindet, und/oder
- dem Haushaltsgerät (120) ermittelt.

7. Steuereinheit (110) nach einem der Ansprüche 5 bis 6, wobei die tatsächlichen Eingabedaten (201, 202, 203, 204) Folgendes angeben:
- Benutzerdaten (201) zum Benutzer (141) in der tatsächlichen Situation, wie beispielsweise dem Zustand, insbesondere einer Position, einer Bewegungsgeschwindigkeit und/oder einer Bewegungsrichtung des Benutzers (141) in der tatsächlichen Situation,
- Gerätedaten (202) zu dem Haushaltsgerät (120), insbesondere zum Zustand des Haushaltsgeräts (120) in der tatsächlichen Situation,
- Ereignisdaten (203) zu einem oder mehreren geplanten Ereignissen des Benutzers (141), insbesondere zu einem oder mehreren Ereignissen, die in einem, insbesondere digitalen, Kalender des Benutzers (141) geplant sind, und/oder
- Umgebungsdaten (204) zu einer Umgebung des Haushaltsgeräts, insbesondere zum tatsächlichen Zustand eines oder mehrerer anderer Haushaltsgeräte (120) im Haushalt des Benutzers (141).

8. Steuereinheit (110) nach einem der Ansprüche 5 bis 7, wobei die Steuereinheit (110) so konfiguriert ist, dass sie
- mithilfe der Prognoseinstanz (200) eine bevorstehende Nutzung (205) des Geräts (120) in der tatsächlichen Situation auf der Grundlage der tatsächlichen Eingabedaten (201, 202, 203, 204) prognostiziert, wobei die prognostizierte bevorstehende Nutzung (205) insbesondere Folgendes angibt:
- eine bevorstehende Aktivierung oder Deaktivierung des Geräts (120),
- einen bevorstehenden Start eines Betriebsprogramms des Geräts (120) und/oder
- einen Zeitpunkt für die bevorstehende Nutzung (205) und
- das Gerät (120) in Abhängigkeit von der prognostizierten bevorstehenden Nutzung (205) automatisch steuert oder
- einen Steuervorschlag für den Benutzer (141) ausgibt, wobei der Steuervorschlag von der prognostizierten bevorstehenden Nutzung (205) abhängig ist.

9. Steuereinheit (110) nach einem der vorhergehenden Ansprüche, wobei die Steuereinheit (110) so konfiguriert ist, dass sie die Prognoseinstanz (200) so trainiert, dass diese eine oder mehrere Nutzungsgewohnheiten des Benutzers (141) reflektiert, die von den Nutzungsdaten angegeben werden.

10. Steuereinheit (110) nach einem der vorhergehenden Ansprüche, wobei die Steuereinheit (110) so konfiguriert ist, dass sie
- für mehrere verschiedene Benutzer (141) des Geräts (120) entsprechend mehrere benutzerspezifische Prognoseinstanzen (200) ermittelt und/oder
- für mehrere verschiedene Haushaltsgeräte (120) entsprechend mehrere gerätespezifische Prognoseinstanzen (200) ermittelt.

11. Verfahren (300) zum Steuern eines Haushaltsgeräts (120), wobei das Verfahren (300) Folgendes umfasst:
- Ermitteln (301) von Nutzungsdaten zu einem Benutzer (141) und einer tatsächlichen Nutzung des Haushaltsgeräts (120) durch den Benutzer (141),
- Trainieren (302) einer Prognoseinstanz (200) auf der Grundlage der Nutzungsdaten mithilfe eines Maschinenlernalgorithmus, und zwar so, dass die Prognoseinstanz (200) so konfiguriert ist, dass sie eine bevorstehende Nutzung (205) des Geräts (102) auf der Grundlage von Eingabedaten (201, 202, 203, 204) prognostiziert, und
- Benutzen (303) der Prognoseinstanz (200) zum Steuern des Haushaltsgeräts (120), wobei das Verfahren durch folgende Schritte gekennzeichnet ist:
- Ermitteln tatsächlicher Eingabedaten (201, 202, 203, 204) für eine tatsächliche Situation,
- Ermitteln einer tatsächlichen Steuerung des Geräts (120), die durch den Benutzer (141) in der tatsächlichen Situation erfolgt ist, und
- Anpassen der Prognoseinstanz (200) auf der Grundlage der tatsächlichen Steuerung und der tatsächlichen Eingabedaten (201, 202, 203, 204).

12. Computerprogramm mit Anweisungen, die, wenn sie von einer Steuereinheit (110), insbesondere einer Steuereinheit (110) eines Haushaltsgeräts (120), ausgeführt werden, die Steuereinheit (110) dazu veranlassen, das Verfahren (300) nach Anspruch 11 durchzuführen.

## Revendications

1. Unité de commande (110) configurée pour commander un appareil électroménager (120) ; dans laquelle l'unité de commande (110) est configurée pour
- déterminer des données d'utilisation concernant un utilisateur (141) et concernant une utilisation réelle de l'appareil électroménager (120) par l'utilisateur (141) ;
- entraîner une entité de prédiction (200) sur la base des données d'utilisation utilisant un algorithme d'apprentissage machine, de sorte que l'entité de prédiction (200) est configurée pour prédire une utilisation à venir (205) de l'appareil (102) sur la base des données d'entrée (201, 202, 203, 204) ; et
- utiliser l'entité de prédiction (200) pour commander l'appareil électroménager (120) ;
**caractérisée en ce que** l'unité de commande (110) est en outre configurée pour
- déterminer des données d'entrée (201, 202, 203, 204) réelles pour une situation réelle ;
- déterminer une commande réelle de l'appareil (120), qui a été exécutée par l'utilisateur (141) dans la situation réelle ; et
- adapter l'entité de prédiction (200) sur la base de la commande réelle et sur la base des données d'entrée (201, 202, 203, 204) réelles.

2. Unité de commande (110) selon la revendication 1, dans laquelle les données d'utilisation comprennent au moins l'une parmi
- des données provenant d'un calendrier numérique de l'utilisateur (141) ;
- des données provenant d'un dispositif utilisateur (140) de l'utilisateur (141) ;
- des données dérivées d'une ou plusieurs conversations de l'utilisateur (141) en utilisant le traitement en langage naturel ;
- des données dérivées d'un compte de média social de l'utilisateur (141) ;
- des données concernant un historique de recherche sur Internet et/ou un historique de navigation sur Internet de l'utilisateur (141) ; et/ou
- des données provenant d'un autre appareil électroménager.

3. Unité de commande (110) selon l'une quelconque des revendications précédentes, dans laquelle les données d'utilisation comprennent au moins l'une parmi
- des données sur un programme de fonctionnement de l'appareil électroménager (120) que l'utilisateur (141) a utilisé ;
- des données sur un ou plusieurs moments auxquels l'utilisateur (141) a utilisé l'appareil électroménager (120) ;
- des données concernant un contexte à l'intérieur duquel l'utilisateur (141) a utilisé l'appareil électroménager (120) ; et/ou
- des données sur un ou plusieurs paramètres de l'appareil électroménager (120) qui ont été définis par l'utilisateur (141).

4. Unité de commande (110) selon l'une quelconque des revendications précédentes, dans laquelle l'entité de prédiction (200) comprend un ou plusieurs réseaux neuronaux artificiels comprenant des paramètres qui ont été entraînés sur la base des données d'utilisation.

5. Unité de commande (110) selon l'une quelconque des revendications précédentes, dans laquelle l'unité de commande (110) est configurée pour
- commander l'appareil électroménager (120) sur la base des données d'entrée (201, 202, 203, 204) réelles en utilisant l'entité de prédiction (200).

6. Unité de commande (110) selon la revendication 5, dans laquelle l'unité de commande (110) est configurée pour déterminer des données d'entrée (201, 202, 203, 204) réelles sur la base des données provenant
- d'un dispositif utilisateur (140) de l'utilisateur (141) ;
- d'un calendrier numérique de l'utilisateur (141) ;
- d'un ou plusieurs capteurs (130) configurés pour capturer des données concernant un domicile à l'intérieur duquel l'appareil électroménager (120) est localisé ; et/ou
- de l'appareil électroménager (120).

7. Unité de commande (110) selon l'une quelconque des revendications 5 à 6, dans laquelle les données d'entrée (201, 202, 203, 204) réelles sont indicatrices
- des données d'utilisateur (201) concernant l'utilisateur (141) à l'intérieur de la situation réelle, telles qu'un état, en particulier une position, une vitesse de déplacement et/ou un sens de déplacement, de l'utilisateur (141) dans la situation réelle ;
- des données d'appareil (202) concernant l'appareil électroménager (120), en particulier concernant un état de l'appareil électroménager (120), dans la situation réelle ;
- des données d'évènement (203) concernant un ou plusieurs évènements programmés de l'utilisateur (141), en particulier un ou plusieurs évènements programmés dans un calendrier, en particulier dans un calendrier numérique, de l'utilisateur (141) ; et/ou
- des données sur l'environnement (204) concernant un environnement de l'appareil électroménager, en particulier concernant un état réel d'un ou plusieurs autres appareils électroménagers (120) au domicile de l'utilisateur (141).

8. Unité de commande (110) selon l'une quelconque des revendications 5 à 7, dans laquelle l'unité de commande (110) est configurée pour
- prédire une utilisation à venir (205) de l'appareil (120) dans la situation réelle sur la base des données d'entrée (201, 202, 203, 204) réelles en utilisant l'entité de prédiction (200) ; dans laquelle l'utilisation à venir (205) prédite est notamment indicatrice de
- une activation ou une désactivation à venir de l'appareil (120) ;
- un démarrage à venir d'un programme de fonctionnement de l'appareil (120) ; et/ou
- un moment pour l'utilisation à venir (205) ; et
- pour commander automatiquement l'appareil (120) en fonction de l'utilisation à venir (205) prédite ; ou
- pour émettre une suggestion de commande à l'utilisateur (141) ; dans laquelle la suggestion de commande dépend de l'utilisation à venir (205) prédite.

9. Unité de commande (110) selon l'une quelconque des revendications précédentes, dans laquelle l'unité de commande (110) est configurée pour entraîner l'entité de prédiction (200) de sorte que l'entité de prédiction (200) reflète une ou plusieurs routines d'utilisation de l'utilisateur (141) indiquées par les données d'utilisation.

10. Unité de commande (110) selon l'une quelconque des revendications précédentes, dans laquelle l'unité de commande (110) est configurée pour
- déterminer une pluralité d'entités de prédiction (200) spécifiques à l'utilisateur pour une pluralité correspondante de différents utilisateurs (141) de l'appareil (120) ; et/ou
- pour déterminer une pluralité d'entités de prédiction (200) spécifiques à l'appareil pour une pluralité correspondante de différents appareils électroménagers (120).

11. Procédé (300) de commande d'un appareil électroménager (120) ; dans lequel le procédé (300) comprend les étapes consistant à
- déterminer (301) des données d'utilisation concernant un utilisateur (141) et concernant l'utilisation réelle de l'appareil électroménager (120) par l'utilisateur (141) ;
- entraîner (302) une entité de prédiction (200) sur la base des données d'utilisation en utilisant un algorithme d'apprentissage machine, de sorte que l'entité de prédiction (200) est configurée pour prédire une utilisation à venir (205) de l'appareil (102) sur la base des données d'entrée (201, 202, 203, 204) ; et
- à utiliser (303) l'entité de prédiction (200) pour commander l'appareil électroménager (120) ;
dans lequel le procédé est **caractérisé par** les étapes consistant à
- déterminer des données d'entrée (201, 202, 203, 204) réelles pour une situation réelle ;
- déterminer une commande réelle de l'appareil (120), qui a été exécutée par l'utilisateur (141) dans la situation réelle ; et
- adapter l'entité de prédiction (200) sur la base de la commande réelle et sur la base des données d'entrée (201, 202, 203, 204) réelles.

12. Programme informatique comprenant des instructions qui, lorsqu'elles sont exécutées par une unité de commande (110), en particulier par une unité de commande (110) d'un appareil électroménager (120), amènent l'unité de commande (110) à exécuter le procédé (300) selon la revendication 11.
